# EUROPÄISCHE PATENTANMELDUNG

(11) **EP 1 357 313 A2**
(43) Veröffentlichungstag der Anmeldung: **29.10.2003**
(21) Anmeldenummer: 03005211.2
(22) Anmeldetag: 08.03.2003
(51) Int. Cl.: F16H 7/22, F16H 7/12

(54) **Zugmitteltrieb zur Erzielung einer elektrischen Signalübertragung**

(30) Priorität: 13.04.2002 DE 10216354
(71) Anmelder: INA-Schaeffler KG, 91074 Herzogenaurach (DE)
(72) Erfinder: Bogner, Michael, 90542 Eckental (DE)

(57) **Zusammenfassung**

Die vorliegende Erfindung betrifft einen Zugmitteltrieb (1), bei dem ein Zugmittel (7) zumindest zwei Riemenscheiben (3 bis 6) teilweise umschließt. Alle Bauteile des Zugmitteltriebs (1), unabhängig von dem verwendeten Werkstoff, weisen zur Erzielung einer Datenübertragung eine elektrische Leitfähigkeit auf.

## Beschreibung

### Gebiet der Erfindung

Die vorliegende Erfindung bezieht sich auf einen Zugmitteltrieb, umfassend zumindest zwei mit einem Antriebselement und einem Abtriebselement verbundene Riemenscheiben, die über ein endloses Zugmittel, insbesondere einen Riemen, verbunden sind. Zur Erzielung einer kontrollierten Vorspannung des Zugmittels ist der Zugmitteltrieb weiterhin mit einer Spannvorrichtung versehen, deren angefederte Spannrolle kraftschlüssig an einem Zugmitteltrum abgestützt ist.

### Hintergrund der Erfindung

Zugmitteltriebe der zuvor genannten Bauart finden beispielsweise Anwendung in Brennkraftmaschinen, zum Antrieb von Aggregaten wie, Generator, Klimakompressor, Wasserpumpe, Lenkhilfspumpe oder weiteren Zusatzaggregaten der Brennkraftmaschine. Ebenfalls sind Zugmitteltriebe in Brennkraftmaschinen zum Antrieb von Nockenwellen eingesetzt, wobei diese zur Vermeidung von Schlupf als Zugmittel einen Zahnriemen aufweisen.

Aus der technischen Fachzeitschrift MTZ (Motortechnische Zeitschrift) Sonderausgabe, 25 Jahre VW-Dieselmotoren, ist auf Seite 89 schematisch ein als Zahnriementrieb ausgelegter Zugmitteltrieb dargestellt, der in einer Brennkraftmaschine zum Anrieb der Nockenwelle dient. Das Zugmittel, der Zahnriemen, verbindet dabei das Antriebselement, das Kurbelwellenrad mit dem Abtriebselement, das endseitig an der Nockenwelle befestigte Nockenwellenrad. Die erforderliche Vorspannkraft wird mittels einer Spannvorrichtung erzielt, die an dem Leertrum des Zugmittels abgestützt ist. Weiterhin umfasst der bekannte Zugmitteltrieb eine Umlenkrolle, zwecks gezielter Umlenkung des Zugmittels bzw. um den Umschlingungswinkel des Zugmittels an den Riemenscheiben zu vergrößern.

An heutige Zugmitteltriebe in Brennkraftmaschinen werden erhöhte Anforderungen gestellt, um möglichst einen Lebensdauereinsatz realisieren zu können. Dabei sollte eine stetige Funktionsüberwachung des Zugmitteltriebs insbesondere des Zugmittels erfolgen. Bekannt sind dazu Einrichtungen, insbesondere Sensoren, die beispielsweise kontinuierlich die Position der Spannvorrichtung erfassen und bei einer unzulässigen Verlagerung bzw. Verschwenkung der mit der Spannvorrichtung verbundenen Spannrolle ein akustisches und/oder optisches Signal auslösen.

Um eine Datenübertragung des Zugmitteltriebs zu verbessern sind prinzipiell aus einem metallischen Werkstoff hergestellte Riemenscheiben, Umlenkrollen oder Spannrollen einsetzbar. Aufgrund des Gewichtsnachteils finden derartige Bauteile in heutigen Zugmitteltrieben keine Anwendung, die für in Fahrzeugen eingesetzte Brennkraftmaschinen bestimmt sind. Folglich ist nach Lösungen zu suchen, die auch für aus Kunststoff hergestellte Riemenscheiben eine wirkungsvolle, unterbrechungsfreie Datenübertragung und/oder Signalübertragung ermöglichen.

### Zusammenfassung der Erfindung

Der vorliegenden Erfindung liegt die Aufgabe zu Grunde, alle Bauteile des Zugmitteltriebs auf elektrischem Wege zu überwachen, um damit stets die Funktion zu überprüfen und einen vorzeitigen Ausfall bzw. den aktuellen Verschleißzustand einzelner Komponenten des Zugmitteltriebs erkennen zu können.

Zur Lösung dieser Problemstellung ist erfindungsgemäß vorgesehen, dass alle Bauteile bzw. Einzelteile des Zugmitteltriebs, unabhängig von dem verwendeten Werkstoff, zur Erzielung einer Signalübertragung und/oder einer Datenübertragung eine ausreichende elektrische Leitfähigkeit aufweisen. Diese Maßnahme ermöglicht eine Übertragung von Signalen und/oder Daten von dem Zugmitteltrieb zu einer zentralen Datenerfassung bzw. dem Motormanagement einer Brennkraftmaschine oder einen Datentransfer von dem Motormanagement in den Zugmitteltrieb.

Vorzugsweise gewährleistet die Erfindung eine exakte Verschleißanzeige des Zugmittels, einschließlich aller mit dem Zugmitteltrieb in Verbindung stehenden Bauteile wie Riemenscheiben, Laufrolle, Spannrolle oder Umlenkrolle. Gleichzeitig kann bei laufender Brennkraftmaschine kontinuierlich durch eine Bestimmung der elektrischen Leitfähigkeit der Verschleißzustand des Zugmittels bestimmt werden. Da sich der Widerstandswert des Zugmittels über die Lebensdauer im Vergleich zum Neuzustand ändert, kann durch die Festlegung eines Grenzwertes der Austausch des Zugmittels vorgenommen werden, bevor es zu einem Ausfall des Zugmittels kommt. Aufgrund der elektrischen Leitfähigkeit aller Bauteile ist weiterhin eine Datenübertragung beispielsweise vom Innenring der Spannrolle oder Umlenkrolle der beispielsweise mit einem Wälzlager in Verbindung steht bis zum Zugmittel möglich, wobei ein Abgriff der Daten im gesamten Bereich des Zugmitteltriebs erfolgen kann.

Vorteilhafte Ausgestaltungen der Erfindung sind Gegenstand der abhängigen Ansprüche 2 bis 17.

Gemäß einer vorteilhaften Ausgestaltung der Erfindung ist sowohl für die Spannrolle, die Umlenkrolle als auch für die Riemenscheiben vorgesehen, diese Bauteile aus einem elektrisch leitfähiger Werkstoff herzustellen. Die elektrische Leitfähigkeit des Werkstoffes wird dabei bevorzugt erzielt, indem dem Werkstoff, insbesondere Kunststoff, geeignete Zusatzstoffe beigemischt werden, um damit den elektrischen Widerstand zu reduzieren und die elektrische Leitfähigkeit zu verbessern.

Als vorteilhafte erfindungsgemäße Maßnahme, die Leitfähigkeit des Werkstoffes zu verbessern, ist vorgesehen, dem Kunststoff als Zusatzstoff Graphit beizumischen.

Alternativ eignet sich ebenfalls eine elektrisch leitfähige Armierung, insbesondere Aluminium oder Kupfer, die in dem Kunststoff integriert sind. Diese vorzugsweise gitterartig gestaltete, in dem Kunststoff eingebettete Armierung, bewirkt neben einer optimierten elektrischen Leitfähigkeit, gleichzeitig eine verbesserte Festigkeit. Ein solche Armierung, kombiniert mit einem durch geeignete Zusatzstoffe elektrisch leitfähigen Kunststoff, kann für Riemenscheiben, Umlenkrollen oder für Spannrollen eingesetzt werden.

Mit geeigneten Zusatzstoffen und/oder Armierungen die in den einzelnen aus Kunststoff hergestellten Bauteilen integriert sind, kann vorteilhaft ein spezifischer elektrischer Widerstand im Bereich von 10⁰ bis 10²⁰ Ohm erzielt werden.

Erfindungsgemäß schließt die Erfindung zur Schaffung einer ausreichenden elektrischen Leitfähigkeit weiterhin ein, die Laufflächen bzw. Kontaktflächen der Riemenscheiben, der Spannrolle sowie der Umlenkrollen zu beschichten. Diese Bauteile stehen vorzugsweise mit einem beschichteten Zugmittel in Verbindung, wobei das Zugmittel, insbesondere der Riemen, beidseitig beschichtet ist, d. h. sowohl an der Innenseite als auch an der Außenseite, über die das Zugmittel an den Riemenscheiben oder den Umlenkrollen bzw. Spannrollen anliegt. Zur Beschichtung der Kontaktflächen eignet sich insbesondere Graphit bzw. eine Graphit haltige Substanz. Ebenso schließt die Erfindung geeignete andere Substanzen ein, die zum einen eine ausreichende Haftung an den jeweiligen Kontaktflächen sicherstellen und gleichzeitig die elektrische Leitfähigkeit verbessern.

Die beschichteten Laufflächen bzw. Kontaktflächen der Riemenscheiben, der Spannrolle, der Laufrolle sowie des Zugmittels kann in vorteilhafter Weise zusätzlich mit einem Kunststoff kombiniert werden, dessen Zusatzstoffe insgesamt die elektrische Leitfähigkeit des gesamten Bauteils verbessern.

Als Grundwerkstoff zur Herstellung der Riemenscheiben, der Umlenkrolle, der Spannrolle sowie der Laufrolle ist vorzugsweise ein Kunststoff vorgesehen, insbesondere EPDM. Aus diesem Grundwerkstoff, versehen mit Zusatzstoffen, kann erfindungsgemäß ein geeigneter Mischwerkstoff mit ausreichender elektrischer Leitfähigkeit hergestellt werden. Dieser Mischwerkstoff eignet sich außerdem zur Aufnahme von Armierungen, die zusätzlich die elektrische Leitfähigkeit verbessern.

Die Riemenscheiben, Spannrollen oder Laufrollen, die zur Verbesserung der elektrischen Leitfähigkeit bzw. Erzielung definierter spezifischer elektrischer Widerstandswerte, aus einem erfindungsgemäßen Mischwerkstoff hergestellt sind, lassen sich idealerweise mit einem Zugmittel kombinieren, in dem elektrisch leitfähige Armierungen eingebettet sind. Dazu eignen sich bevorzugt in Längsrichtung des Zugmittels verlaufende Glasfaserfäden. Alternativ bietet es sich an ebenfalls kohlenstoffhaltige Fasern oder dünne Kupferlitzen in das Zugmittel einzubetten. Das Zugmittel ist bevorzugt als ein Zahnriemen ausgebildet. Zur Verbesserung der elektrischen Leitfähigkeit ist der Zahnriemen armiert und ergänzend bzw. alternativ zumindest an den Kontaktflächen oberflächenbeschichtet.

Bei länger im Einsatz befindlichen Zugmitteln kommt es sowohl an dem Riemenrücken der Mantelfläche als auch an der profilierten Innenseite zu Rissbildungen, bzw. gewissen Ermüdungsbrüchen. Die erfindungsgemäße Beschichtung verändert sich ebenfalls im Laufe der Lebensdauer, die folglich ebenfalls Risse aufweist und wodurch sich ebenfalls der spezifische elektrische Widerstandswert verändert und damit die elektrische Leitfähigkeit. Der veränderte Wert kann mittels einer elektrischen Spannung nachgewiesen werden, welche beispielsweise an der Riemenscheibe, welche der Kurbelwelle zugeordnet ist, angelegt wird und ein Spannungsabgriff an einer weiteren Riemenscheibe oder entfernt von der Kurbelwellen-Riemenscheibe unmittelbar am Zugmittel erfolgt. Ein auftretender Spannungsunterschied gibt einen Hinweis auf einen sich geänderten Widerstandswert. Aufgrund von empirischen Versuchen können Grenzwerte festgelegt werden, die unbedingt ein Austausch des Zugmittels erfordern. Diese Maßnahme ermöglicht eine kontinuierliche Überwachung des Zugmittelzustandes und gibt dem Werkstattpersonal damit den Hinweis, wann ein Austausch des Zugmittels erfolgen muss.

Für einen Spannungsabgleich ist erfindungsgemäß eine Messeinrichtung vorgesehen, die zumindest einen unmittelbar mit einem umlaufenden oder rotierenden Bauteil des Zugmitteltriebs zusammenwirkenden Schleifkontakt umfasst sowie einen weiteren ortsfest angeordneten Kontakt. Alternativ eignet sich weiterhin eine berührungslos, induktiv wirkende Messeinrichtung, deren Messwertgeber mit den voneinander entfernt angeordneten Riemenscheiben des Zugmitteltriebs zusammenwirkt.

Die Messeinrichtung kann außerdem durch einen Sensor ergänzt werden, der zur Messung der Wälzlager-Temperatur in der Spannrolle und/oder der Umlenkrolle vorgesehen ist. Die Überschreitung anzulässiger Grenztemperaturen kann beispielsweise dem Fahrer durch ein optisches oder akustisches Signal angezeigt werden.

Ein weiterer Sensor kann der Spannvorrichtung zugeordnet werden, der die Stell- oder Schwenkbewegungen erfasst. Die Überschreitung unzulässig großer Ausschläge der Spannrolle gibt dabei unmittelbar einen Hinweis auf eine zu große Längung des Zugmittels. Ein solcher ist in ein optisches oder akustisches Signal umsetzbarer Messwert zeigt dem Fahrer den notwendigen Austausch des Zugmittels an.

Alternativ sieht die Messeinrichtung vor, dass generell alle einen Grenzwert überschreitende Messwerte, beispielsweise in einem dem Motormanagement zugeordneten Speicher abgelegt werden. Im Rahmen einer von dem Werkstattpersonal durchgeführten Inspektion, einer Diagnose, kann folglich gezielt das gefährdete Bauteil ermittelt und ausgetauscht werden.

Die Erfindung ist bevorzugt übertragbar auf Zugmitteltriebe mit elastischen Zugmitteln, Riemen wie beispielsweise Flachriemen, Zahnriemen oder flankenoffene Keilriemen.

Die Erfindung kann weiterhin kombiniert werden mit allen bekannten automatisierten Spannvorrichtungen, zur Erzielung einer ausreichenden Vorspannung des Zugmittels.

### Kurze Beschreibung der Zeichnungen

Nachstehend wird die Erfindung anhand eines in insgesamt vier Figuren dargestellten Ausführungsbeispiels näher erläutert.

Es zeigen:
- Figur 1: in einer Perspektive eine Brennkraftmaschine mit einem stirnseitigen Zugmitteltrieb;
- Figur 2: in einer Schnittansicht den Aufbau des Zugmittels;
- Figur 3: eine der Figur 2 vergleichbare Schnittansicht, versehen mit einer alternativen Armierung;
- Figur 4: die Schnittansicht durch eine Riemenscheibe des in Figur 1 abgebildeten Zugmitteltriebs.

### Detaillierte Beschreibung der Zeichnungen

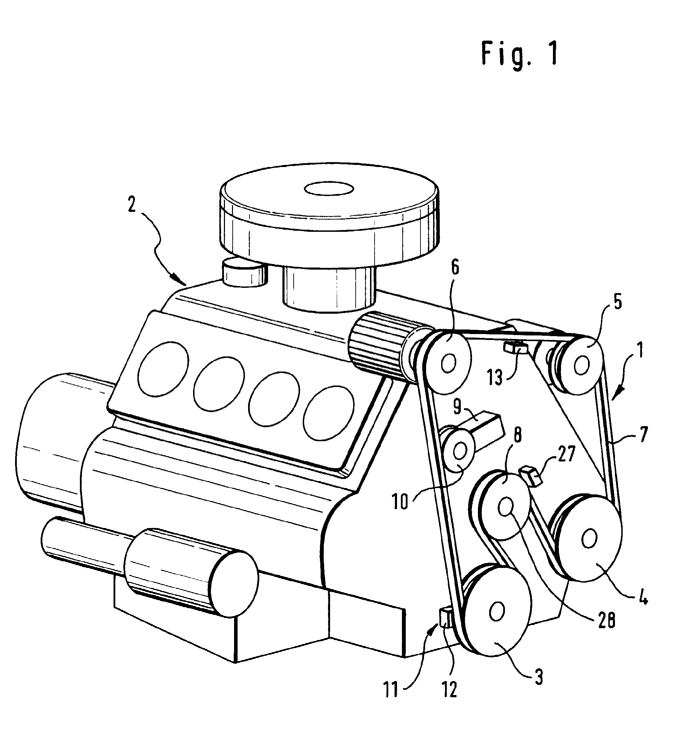

Die Figur 1 zeigt einen Zugmitteltrieb 1, der stirnseitig an einer Brennkraftmaschine 2 zum Antrieb von Aggregaten vorgesehen ist. Eine in axialer Verlängerung einer Kurbelwelle angeordnete Riemenscheibe 3 bildet das Antriebselement, von dem ausgehend verschiedene Aggregate angetrieben werden. Die Riemenscheibe 4 ist der Wasserpumpe, die Riemenscheibe 5 der Lenkhilfspumpe und die Riemenscheibe 6 dem Generator zugeordnet, die gemeinsam Abtriebselemente darstellen. Dabei umschließt ein Zugmittel 7 zumindest teilweise die Riemenscheibe 3 sowie alle übrigen mit den Aggregaten verbundenen Riemenscheiben 4, 5 und 6. Zwischen der Wasserpumpe, der Riemenscheibe 4 sowie der an der Kurbelwelle befindlichen Riemenscheibe 3 umschließt das Zugmittel 7 weiterhin eine Umlenkrolle 8, die eingesetzt ist um einen Umschlingungswinkel des Zugmittels 7 an den Riemenscheibe 3 und 4 zu vergrößern. In einem einen Leertrum bildenden Abschnitt des Zugmittels 7 zwischen der Riemenscheibe 6 des Generators, und der Riemenscheibe 3 der Kurbelwelle ist weiterhin eine Spannvorrichtung 9 angeordnet, die ortsfest an der Brennkraftmaschine 2 befestigt, eine durch Federkraft kraftschlüssig an dem Zugmittel 7 abgestützte Spannrolle 10 umfasst.

Erfindungsgemäß sind zur Überwachung des Zugmitteltriebs 1 alle umlaufenden bzw. rotierenden Bauteile, d. h. sowohl die Riemenscheibe 3 der Kurbelwelle als auch alle übrigen mit den einzelnen Aggregaten verbundenen Riemenscheiben 4 bis 6 sowie die Umlenkrolle 8 und die Spannrolle 10 einschließlich des Zugmittels 7 aus einem elektrisch leitfähigen Werkstoff hergestellt. Dieser Aufbau ermöglicht eine Datenübertragung und/oder Signalübertragung beispielsweise von dem drehfest angeordneten Innenring einer der Umlenkrolle 8 zugeordneten Wälzlagerung bis zu dem Zugmittel 7. Weiterhin ermöglicht der erfindungsgemäße Aufbau einen Spannungsabgleich, bei dem eine elektrische Spannung in ein Bauteil des Zugmitteltriebs 1 eingeleitet wird und entfernt davon, die übertragene Spannung abgeglichen wird. Dies kann beispielsweise mit der Messeinrichtung 11 erfolgen, die einen Schleifkontakt 12 umfasst, welcher mit der Riemenscheibe 3 zusammenwirkt. Weiterhin schließt die Messeinrichtung 11 einen Kontakt 13 ein, der berührungslos dem Zugmittel 7 zwischen den Riemenscheiben 5 und 6 zugeordnet ist. Die Messeinrichtung 11 kann außerdem durch einen Sensor 27 ergänzt werden, der insbesondere zur Temperaturmessung der Wälzlagerung 28 der Umlenkrolle 8 vorgesehen ist. Alternativ können alle Wälzlagerungen des Zugmitteltriebs 1 mittels Sensoren überwacht werden. Weiterhin bietet es sich an, die Spannvorrichtung 9 mit einem Sensor zu versehen, der die Stell- oder Schwenkbewegungen der Spannrolle 10 erfasst.

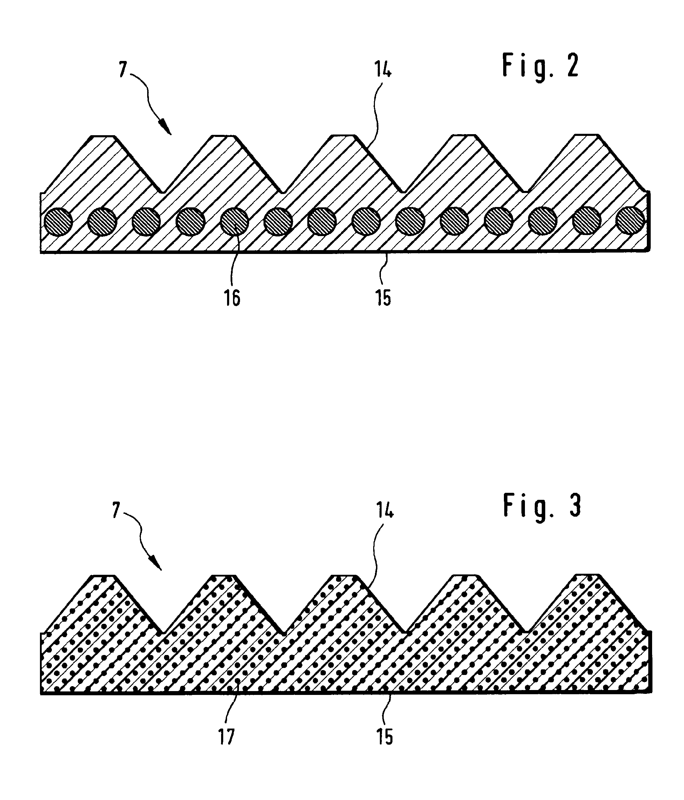

Die Figur 2 zeigt einen erfindungsgemäßen Aufbau des Zugmittels 7. Das innenseitig ein Zahnprofil 14 und eine ebene, glatte Außenseite 15 bzw. Mantelfläche aufweisende Zugmittel 7 ist aus einem elastischen Grundwerkstoff, insbesondere EPDM, hergestellt. Übereinstimmend kann zur Verbesserung der elektrischen Leitfähigkeit sowohl das Zahnprofil 14 als auch die Außenseite 15 beschichtet werden. Alternativ oder gemeinsam mit der Beschichtung ist gemäß der Erfindung das Zugmittel 7 weiterhin mit in Längsrichtung des Zugmittels 7 verlaufenden Fasern 16 versehen. Diese beispielsweise aus kohlenstoffhaltigen Fasern 16 bestehenden Armierungen oder Einlagerungen gewährleisten eine unabhängig von der Beschaffenheit der äußeren Beschichtung eine über die Lebensdauer des Zugmittels konstante elektrische Leitfähigkeit.

In Figur 3 ist das im Querschnitt abgebildete Zugmittel 7 mit einer netzartigen Armierung 17 versehen, die sowohl in dem zur Außenseite 15 weisenden Grundkörper als auch in dem Zahnprofil 14 eingebettet sind. Die Armierung 17 bildet dabei vorzugsweise ein engmaschiges aus vielen einzelnen, dünnen, vorzugsweise Glasfaserfäden bestehendes Netzwerk.

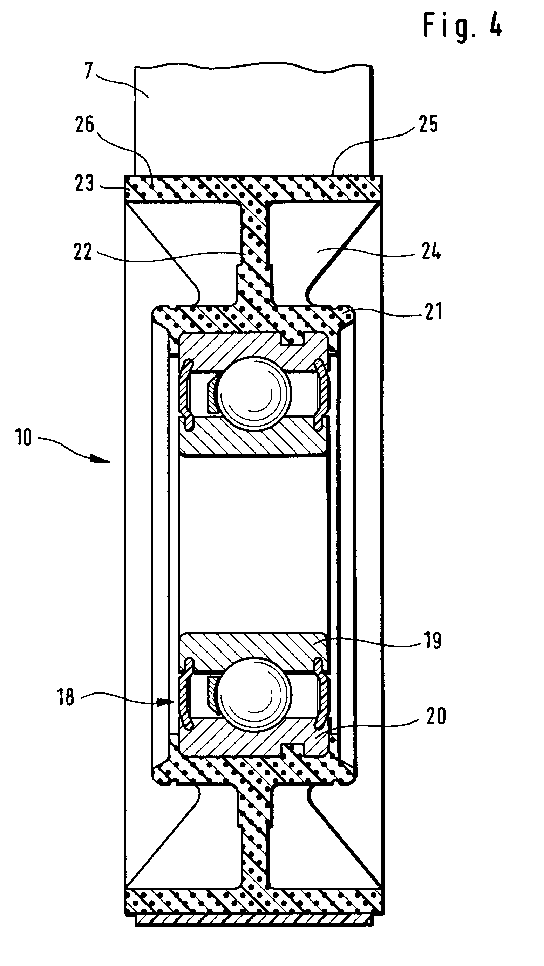

Die in Figur 4 abgebildete Spannrolle 10 umfasst ein als Rillenkugellager gestaltetes Wälzlager 18, dessen Innenring 19 drehfest beispielsweise mit der Spannvorrichtung 9 verbunden ist. Der Außenring 20 ist außenseitig von einer Nabe 21 umschlossen. Die Nabe 21 bildet dabei das Innenteil eines aus Kunststoff hergestellten kreisringförmigen Scheibenteils 24, wobei die Nabe 21 über einen radial ausgerichteten Steg 22 mit einem Außenteil 23 verbunden ist, an dessen Mantelfläche 25, gemäß das Zugmittel 7 geführt ist. Zur Verbesserung der elektrischen Leitfähigkeit zwischen den aus Stahl hergestellten Einzelteilen des Wälzlagers 18 und dem an der Mantelfläche 25 geführten Zugmittel 7, ist in dem aus Kunststoff hergestellten Scheibenteil 24 eine die Leitfähigkeit verbessernde Armierung 26 eingebettet. Die Armierung 26 erstreckt sich dabei über alle Bereiche des Scheibenteils 24, wodurch ein großflächiger Kontakt zwischen dem Außenring 20 des Wälzlagers 18 und der Mantelfläche 25 einstellt. Alternativ oder ergänzend zu der Armierung 26 schließt die Erfindung ebenfalls eine beschichtete Mantelfläche 25 des Scheibenteils 24 ein, wozu sich beispielsweise Graphit oder eine graphithaltige Substanz eignet.

### Bezugszahlen

- 1: Zugmitteltrieb
- 2: Brennkraftmaschine
- 3: Riemenscheibe (Kurbelwelle)
- 4: Riemenscheibe (Wasserpumpe)
- 5: Riemenscheibe (Lenkhilfspumpe)
- 6: Riemenscheibe (Generator)
- 7: Zugmittel
- 8: Umlenkrolle
- 9: Spannvorrichtung
- 10: Spannrolle
- 11: Messeinrichtung
- 12: Schleifkontakt
- 13: Kontakt
- 14: Zahnprofil
- 15: Außenseite
- 16: Fasern
- 17: Armierung
- 18: Wälzlager
- 19: Innenring
- 20: Außenring
- 21: Nabe
- 22: Steg
- 23: Außenmantel
- 24: Scheibenteil
- 25: Mantelfläche
- 26: Armierung
- 27: Sensor
- 28: Wälzlagerung

## Patentansprüche

1. Zugmitteltrieb, umfassend ein endloses Zugmittel (7), insbesondere einen Riemen, der zumindest zwei mit einem Antriebselement und einem Abtriebselement verbundene Riemenscheiben (3 bis 6), verbindet und eine Spannvorrichtung (9) eine kontrollierte Vorspannung des Zugmittels (7) ermöglicht, wobei sich eine angefederte Spannrolle (10) kraftschlüssig an einem Zugmitteltrum abstützt, **dadurch gekennzeichnet, dass** alle Bauteile bzw. Einzelteile des Zugmitteltriebs (1), unabhängig von dem verwendeten Werkstoff, zur Erzielung einer Datenübertragung und/oder einer Signalübertragung eine elektrische Leitfähigkeit des Zugmittels (7) sicherstellen.

2. Zugmitteltrieb nach Anspruch 1, wobei die Spannrolle (10), die Riemenscheiben (3 bis 6), eine Umlenkrolle (8) sowie das Zugmittel (7) aus einem leitfähigen Werkstoff hergestellt sind.

3. Zugmitteltrieb nach Anspruch 2, wobei ein Mischwerkstoff die Leitfähigkeit sicherstellt, der Kunststoff als Basiswerkstoff aufweist, dem Graphit beigemengt ist.

4. Zugmitteltrieb nach Anspruch 2, wobei in dem Kunststoff eine leitfähige Armierung (17, 26) eingebettet ist, die gitterartig in ein Scheibenteil (24) der die Spannrolle (10), in die Riemenscheibe (3 bis 6) sowie in die Umlenkrolle (8) integriert sind.

5. Zugmitteltrieb nach Anspruch 2, wobei der leitfähige Kunststoff einen spezifischen elektrischen Widerstandswert von 10° bis 10²⁰ Ohm aufweist.

6. Zugmitteltrieb nach Anspruch 1, bei dem die elektrische Leitfähigkeit der Riemenscheiben (3 bis 6), der Umlenkrolle (8), der Spannrolle (10) sowie des Zugmittels (7) mittels einer beschichteten Kontaktfläche erzielbar ist.

7. Zugmitteltrieb nach Anspruch 1, bei dem die elektrische Leitfähigkeit durch eine Kombination eines leitfähigen Kunststoffs in Verbindung mit einer beschichteten Kontaktfläche erreichbar ist.

8. Zugmitteltrieb nach Anspruch 6, bei dem die Kontaktflächen zur Verbesserung der elektrischen Leitfähigkeit mit Grafit oder einer graphithaltigen Substanz beschichtet sind.

9. Zugmitteltrieb nach Anspruch 1, wobei für das Zugmittel (7) als Grundwerkstoff ein elastomeres Material, insbesondere EPDM, vorgesehen ist, das mit geeigneten Zusatzstoffen einen Mischwerkstoff bildet, der die elektrische Leitfähigkeit sicherstellt.

10. Zugmitteltrieb nach Anspruch 9, wobei in dem Zugmittel (7) elektrisch leitfähige Armierungen (17) eingebettet sind.

11. Zugmitteltrieb nach Anspruch 10, bei dem in dem Zugmittel (7) in Längsrichtung verlaufende Glasfasern (16), insbesondere Glasfaserfäden, eingelagert sind.

12. Zugmitteltrieb nach Anspruch 10, wobei in dem Zugmittel (7) in Längsrichtung verlaufende, bzw. netzartig zu einer Matte zusammengefügte kohlenstoffhaltige Fasern (16) eingelagert sind.

13. Zugmitteltrieb nach Anspruch 1, wobei ein als Zahnriemen ausgebildetes Zugmittel (7) eingesetzt ist, das sowohl an einer strukturierten, ein Zahnprofil (14) aufweisenden Innenseite als auch außenseitig an einer Mantelfläche (25) mit einem leitfähigem Material beschichtet ist.

14. Zugmitteltrieb nach Anspruch 1, bei dem die elektrische Leitfähigkeit des Zugmittels (7) mittels einer Messeinrichtung (11) bestimmt werden kann, die zumindest einen Schleifkontakt (12) aufweist, der mit einem von dem Schleifkontakt (12) entfernt angeordneten weiteren Kontakt (13) zusammenwirkt.

15. Zugmitteltrieb nach Anspruch 14, wobei die Messeinrictitung (11) zumindest einen Sensor (27) einschließt, der unmittelbar mit einer Wälzlagerung (28) der Umlenkrolle (8) in Verbindung steht.

16. Zugmitteltrieb nach Anspruch 1, wobei die Spannvorrichtung (9) einen selbsttätig wirkenden Verstellexzenter einschließt, dessen Spannrolle (10) an dem Zugmittel (7) angefedert ist.

17. Zugmitteltrieb nach Anspruch 1, wobei die Spannvorrichtung (9) ein ortsfestes Basisteil umfasst, das über ein Drehlager mit einem Schwenkarm verbunden ist, an dessen freien Ende die Spannrolle (10) drehbar angeordnet an dem Zugmittel (7) federnd abgestützt ist.
